# EUROPÄISCHE PATENTSCHRIFT

(11) **EP 2 159 539 B1**
(45) Veröffentlichungstag und Bekanntmachung des Hinweises auf die Patenterteilung: **13.03.2013**
(21) Anmeldenummer: 09168701.2
(22) Anmeldetag: 26.08.2009
(51) Int. Cl.: G01C 15/00

(54) **Laservorrichtung**
Laser device
Dispositif laser

(30) Priorität: 28.08.2008 DE 202008008821 U
(43) Veröffentlichungstag der Anmeldung: 03.03.2010
(73) Patentinhaber: Stabila Messgeräte Gustav Ullrich GmbH, 76855 Annweiler (DE)
(72) Erfinder: Kallabis, Gabriel, 76848, Spirkelbach (DE); Kremer, Thomas, 76855, Annweiler am Trifels (DE)
(74) Vertreter: Stoffregen, Hans-Herbert

(56) Entgegenhaltungen:
- DE-A1- 19 757 461

## Beschreibung

Die Erfindung bezieht sich auf eine Laservorrichtung, insbesondere Rotationslaser, umfassend eine Aufnahme mit einer von dieser ausgehenden Lasereinheit und gegebenenfalls mit einem eine Laserstrahlung in eine Rotationsebene umlenkenden Rotationskopf, wobei die Aufnahme mit einem Basiselement verbunden ist, zu dem die Aufnahme neigungsmäßig über zwei Stellantriebe verstellbar ist.

Bei Rotationslasem werden üblicherweise Kipp- bzw. Kugelgelenke eingesetzt, um den Rotationskopf mit der Drehachse für ein Pentaprisma oder ein gleichwirkendes Element, mittels dessen der Laserstrahl in eine Rotationsebene umgelenkt wird, auszurichten. Dabei kann der Rotationskopf von einem Sensorgehäuse ausgehen, das z. B. über ein Kugelgelenk mit einem Rahmen verbunden ist, zu dem das Sensorgehäuse ausgerichtet wird. In dem Sensorgehäuse befinden sich elektronische Libellen, um die Vertikalität zu ermitteln. Dabei erfolgt in einem Regelkreis ein Verstellen des Sensorgehäuses über zwei Stellmotoren, um die gewünschte Vertikalität für das Sensorgehäuse und damit ein Ausrichten der Rotationsebene zur Horizontalen zu ermöglichen. Bevorzugterweise gelangen Spindelantriebe zum Einsatz.

Auch sind Kippgelenke bekannt, die zwei Schenkel umfassen, an die wiederum Stellmotoren angreifen, um entsprechende Drehachsen auszurichten. Ferner sind Lagerungen über Kardanringe realisierbar.

Bei einem Rotationsbaulaser nach der EP-B-1 484 578 geht ein eine Lasereinheit mit mit dieser verbundenem Rotationsteil von einer Kugelkalottenlagerung aus, die in einem Montagerahmen gelagert ist. Eine ähnliche Konstruktion findet sich in der EP-A-0 854 351 wieder.

Um bei einem Rotationslaser die von einem Rotationskopf emittierte Laserstrahlung zur Horizontalen auszurichten, sieht die US-B-6,688,011 zueinander verstellbare Platten als Lagerung für eine Lasereinheit mit dem Rotationskopf vor.

Die bekannten Konstruktionen weisen den Nachteil auf, dass neben einer aufwendigen Konstruktion aufgrund einer Vielzahl von mechanischen Bauteilen durch die Lagerung der zu einem als Basis zu bezeichnenden Rahmen bzw. Gehäuse verstellbaren die Lasereinheit und den Laserkopf aufnehmenden Baueinheit ein Spiel zwischen diesen vorhanden ist, das zu einer Ungenauigkeit der Ausrichtung der Rotationsebene zur Horizontalen bzw. zu einem häufigen Nachregeln führt.

Die DE-A-10 2004 024 755 beschreibt eine Halterung für ein optisches Element, das mit einem Träger über Festkörpergelenke verbunden ist.

Ein Rotationslager nach der DE-C-2004 052 154 besteht aus einem kegel- oder pyramidenförmigen und Durchbrechungen aufweisenden Lagerkorb, der einen optischen Spiegel gegenüber einem Träger abstützt. Mittels des Rotationslagers soll eine hochgenaue Einstellbarkeit des optischen Spiegels ermöglicht werden. Zum Verstellen sind Stellantriebe vorgesehen.

Nach der DE-B-10 2004 011 724 sieht eine miniaturisierte Zweiachsen-Piezo-Betätigungseinrichtung Festkörper-Biegegelenke vor, die in der Ebene verlaufen, in der ein Trägerrahmen mit einer Platte verbunden wird.

Um thermische Einflüsse bei einer Positionsmesseinrichtung zu kompensieren, sind nach der DE-A-10 2006 004 898 Festkörpergelenke vorgesehen, die zwischen einem Träger und einem Adapter verlaufen.

Gegenstand der DE-A-10 2004 053 249 ist ein Baulaser mit neigbarem Umlenkmittel, wobei eine Verstellung über einen Piezoaktor erfolgt.

Eine gattungsbildende Laservorrichtung ist der DE-A-197 57 461 zu entnehmen. Die Laservorrichtung umfasst ein Gerätegehäuse mit Lasereinheit, das über einen Anschlusszapfen mit einer Justierplatte verbunden ist, die über einen Stehbolzen gelenkig auf einer Grundplatte abgestützt ist. Die Justierplatte wird gegenüber der Grundplatte über eine Feder gespannt.

Der vorliegenden Erfindung liegt die Aufgabe zu Grunde, eine Laservorrichtung wie Rotationslaser der eingangs genannten Art so weiterzubilden, dass mit konstruktiv einfachen Maßnahmen eine sichere Lagerung der Aufnahme für die Lasereinheit gegeben ist, wobei gleichzeitig ein Spiel zwischen den gegeneinander kippbaren Bauteilen ausgeschlossen werden soll.

Zur Lösung der Aufgabe sieht die Erfindung im Wesentlichen vor, dass die Aufnahme mit dem Basiselement über die zwei Stellantriebe und über ein Festkörpergelenk verbunden ist, dass die Aufnahme, das Basiselement und das Festkörpergelenk eine aus Kunststoff bestehende Einheit bilden, und dass die Stellantriebe zu dem Festkörpergelenk derart angeordnet sind, dass Verbindungslinien zwischen Längsachse des Festkörpergelenks und den Stellantrieben einen rechten Winkel einschließen.

Abweichend von vorbekannten Lösungen bilden Basiselement oder Rahmen der Laservorrichtung wie des Rotationslasers und die auch als Träger zu bezeichnende Aufnahme für die Lasereinheit und den ggfs. vorhandenen Rotationskopf ein einziges Bauteil, wobei Aufnahme und Basiselement im erforderlichen Umfang gegeneinander neigungsmäßig über das Festkörpergelenk verstellbar sind. Durch die Verwendung des vorzugsweise stab- wie quader- oder zylinderförmigen Festkörpergelenkes ergibt sich ein spielfreies Kippen der Aufnahme zu dem Basiselement ohne Reibung. Eine Schmierung ist nicht erforderlich. Eine Wartung des Gelenks selbst entfällt.

Die Relativbewegung von Aufnahme und Basiselement erfolgt dabei über zwei Stellantriebe, über die die Aufnahme mit dem Basiselement verbunden ist, wobei die Stellantriebe zu dem Festkörpergelenk derart angeordnet sind, dass Verbindungslinien zwi-schen Längsachse des Festkörpergelenks und den Längsachsen der Stellantriebe einen rechten Winkel einschließen. Hierdurch ist sichergestellt, dass beim Betätigen eines Stellmotors ein Kippen der Aufnahme zum Basiselement um eine einzige definierte Achse erfolgt.

Insbesondere ist vorgesehen, dass jeder Stellantrieb eine Spindel mit an dem Basiselement sich abstützender Spindelmutter umfasst, wobei die Spindel über einen von der Aufnahme ausgehenden Motor in Drehbewegung versetzbar ist.

Um eine präzise Verstellung zu ermöglichen, sieht eine Weiterbildung der Erfindung vor, dass die Spindelmuttern der Stellantriebe auf dem Basiselement in Abstützpunkten gelagert sind, die in einer oder nahezu in einer Ebene liegen, in der der Drehpunkt des Festkörpergelenks verläuft.

Bevorzugterweise ist die Spindelmutter hülsenartig ausgebildet und umgibt die Spindel.

Als Stellantriebe können auch sonstige Aktoren wie Piezoelemente eingesetzt werden.

In Weiterbildung der Erfindung umfasst die Aufnahme eine Grundplatte, von der ein Gehäuse für die Lasereinheit ausgeht, das mit einem Rotationskopf verbunden sein bzw. diesen aufnehmen kann.

Das Basiselement selbst ist bevorzugterweise plattenförmig ausgebildet, so dass das Festkörpergelenk folglich zwei plattenförmige Bauteile miteinander verbindet.

Die Aufnahme bzw. die Grundplatte dieser bildet eine Einheit mit dem Festkörpergelenk und dem Basiselement. Dabei besteht die Einheit aus Kunststoff, insbesondere Polypropylen. Bevorzugterweise ist die Aufnahme bzw. die Grundplatte mit dem Festkörpergelenk und dem Basiselement ein Spritzgussteil.

Bevorzugterweise weist das einen Vollkörper bildende Festkörpergelenk zumindest abschnittsweise eine Quadergeometrie auf. Dabei sollten die Verbindungslinien, die zwischen den Stellantrieben und der Längsachse des Festkörpergelenkes verlaufen, senkrecht oder nahezu senkrecht Außenflächen des die Quadergeometrie aufweisenden Abschnitts des Festkörpergelenkes durchsetzen.

Insbesondere besteht das Festkörpergelenk aus einem eine Quadergeometrie aufweisenden Mittelteil und zu beiden Seiten verlaufenden sich im Querschnitt vergrößernden Endabschnitten, die in die Grundplatte bzw. das Basiselement übergehen.

Die Erfindung würde auch dann nicht verlassen, wenn das Mittelteil derart ausgebildet ist, dass dessen Außenflächen jeweils gekrümmt sind, also einen Radius aufweisen, ohne dass zwingend die gewünschte Wirkung des Quaders verlassen sein muss.

Des Weiteren sollte das Festkörpergelenk symmetrisch zu einer senkrecht die Längsachse des Festkörpergelenks schneidenden Ebene ausgebildet sein, wobei bevorzugterweise die Ebene mittig zwischen einander zugewandten Flächen der Grundplatte und des Basiselements verläuft.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

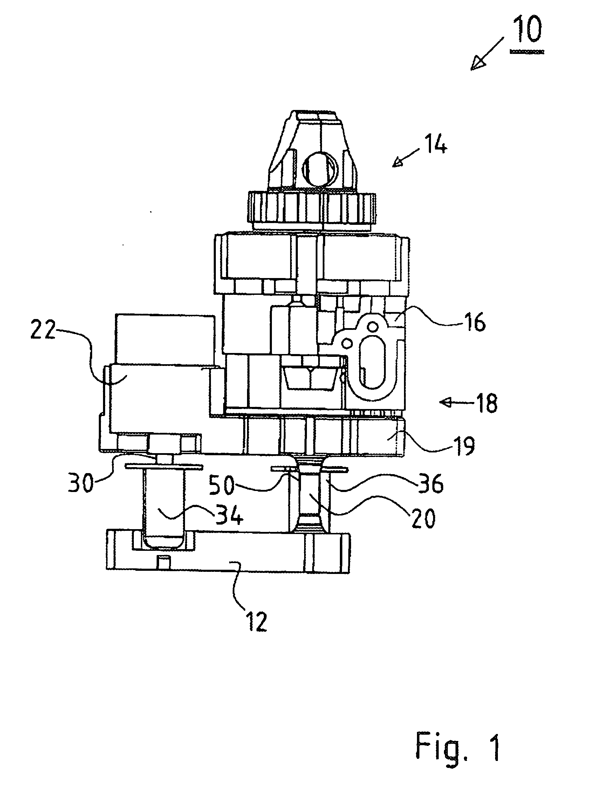

- Fig. 1: eine erste Seitenansicht eines Rotationslasers,

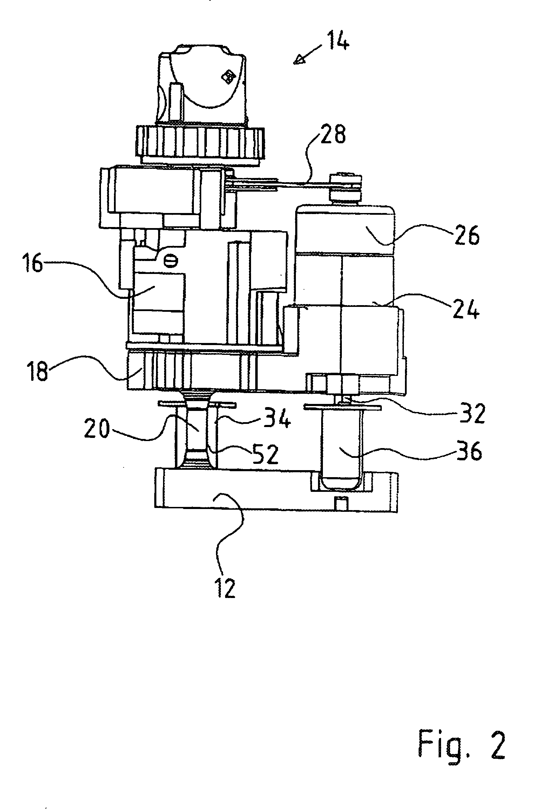

- Fig. 2: den Rotationslaser nach Fig. 1 in einer um 90° gedrehten Position,

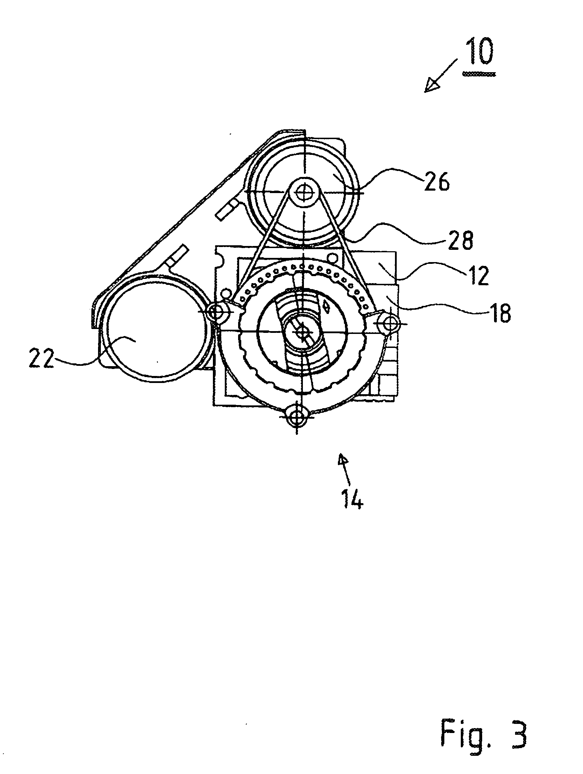

- Fig. 3: eine Draufsicht auf den Rotationslaser nach den Fig. 1 und 2,

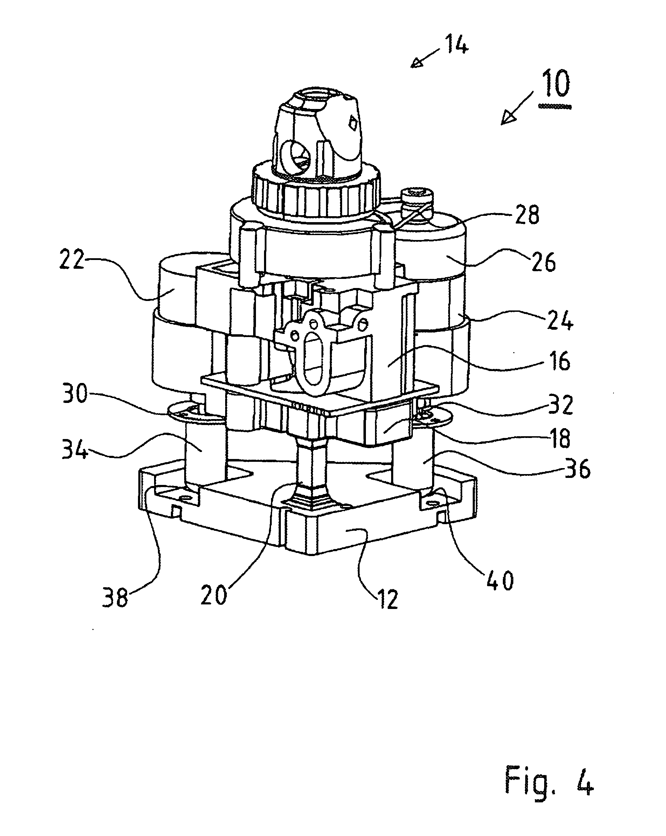

- Fig. 4: eine erste perspektivische Darstellung des Rotationslasers nach den Fig. 1 bis 3,

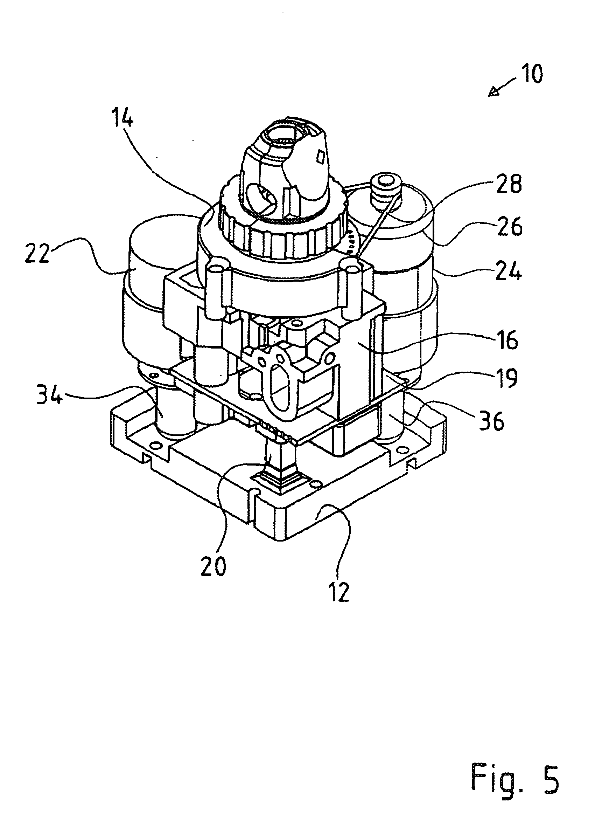

- Fig. 5: eine zweite perspektivische Darstellung des Rotationslasers nach den Fig. 1 bis 3,
- Fig. 6: Elemente des Rotationslasers nach den Fig. 1 bis 5 und
- Fig. 7: in vergrößerter Darstellung den Bereich A in Fig. 6.

Die Erfindung wird nachstehend anhand eines Rotationslasers erläutert, ohne hierdurch die Erfindung einzuschränken. Dabei ist in den Figuren, in denen gleiche Elemente mit gleichen Bezugszeichen versehen sind, das Innenteil, also Innenleben des Rotationslasers dargestellt, das mit dem Bezugszeichen 10 gekennzeichnet ist und in einem nicht dargestellten Außengehäuse des Lasers angeordnet wird. Ein entsprechender Rotationslaser, auch Rotationsbaulaser genannt, der einen zumindest segmentweise rotierenden Laserstrahl umfasst, wird z. B. im Baugewerbe eingesetzt, um eine definiert geneigte Ebene, insbesondere eine horizontal verlaufende Ebene, festzulegen. Hierzu wird von einer Lasereinheit ein Laserstrahl emittiert, der etwa um 90° von einer Umlenkeinrichtung umgelenkt wird, die ihrerseits in einem Rotationskopf drehbar gelagert ist. Die Drehachse schneidet sich mit der Laserstrahlachse des umgelenkten Laserstrahls. Bei der Umlenkeinrichtung kann es sich z. B. um ein Pentaprisma handeln. Dabei muss die Lasereinheit mit dem Rotationskopf zu einer Basis des Rotationslasers im gewünschten Umfang verstellbar sein, um die gewünschte Rotationsebene der Laserstrahlung einzustellen. Zur Ausrichtung zur Horizontalen weist hierzu die Lasereinheit sowie die den Rotationskopf aufnehmende Aufnahme elektronische Libellen auf, um in einem Regelkreis Stellantriebe zu betätigen, um die gewünschte horizontale Ausrichtung der Aufnahme zu einem den Rotationslaser abstützenden Basiselement zu erzielen. Insoweit wird jedoch auf hinlänglich bekannte Konstruktionen verwiesen, ohne dass es weiterer Erläuterungen bedarf.

Das in den Figuren dargestellte Innenteil des Rotationslasers umfasst ein plattenförmiges Basiselement 12, das innerhalb des nicht dargestellten Gehäuses des Rotationslasers verläuft, aber auch ggf. das Gehäuse bodenseitig verschließt. Das Basiselement 12 ist plattenförmig ausgebildet, ohne dass hierdurch eine Einschränkung der Erfindung erfolgt.

Der Rotationskopf 14 und die in einem Gehäuse 16 angeordnete Lasereinheit gehen von einer Aufnahme 18 aus, die auch als Träger zu bezeichnen ist. Der Träger 18 ist plattenförmig ausgebildet bzw. umfasst ein plattenförmiges Trägerelement 19 und ist erfindungsgemäß mit dem Basiselement 12 über ein Festkörpergelenk 20 verbunden.

In dem Gehäuse 16 sind nicht dargestellte elektronische Libellen oder gleichwirkende Elemente vorhanden, deren Ausgangssignale benutzt werden, um Getriebe umfassende Motoren 22, 24 regelnd zu betätigen, damit die Aufnahme 18 unabhängig von der Stellung des Basiselementes 12 zur Horizontalen ausgerichtet und somit der von dem Rotationskopf 14 umgelenkte Laserstrahl in einer horizontal verlaufenden Rotationsebene umgelenkt werden kann. Die in dem Rotationskopf 14 vorhandene Strahlumlenkeinrichtung wie Pentaprisma wird mittels eines weiteren Motors 26 und eines Riemens 28 in Drehbewegung versetzt. Der Rotationskopf mit dem von der Aufnahme 18 ausgehenden Gehäuse 16 können eine Einheit bilden, sind jedoch bevorzugterweise getrennt hergestellte Bauteile.

Über die Stellmotoren 22, 24 wird jeweils eine Spindel 30, 32 in Drehbewegung versetzt, die in einer als Hülse 34, 36 ausgebildete Spindelmutter eingreift, die wiederum auf dem Basiselement 12 bzw. in diesem ausgebildeten Vertiefungen 38, 40 abgestützt ist. Somit kann bei Betätigen des Motors 22 bzw. 24 die Spindel 30, 32 zu der Hülse 34, 36 verstellt werden mit der Folge, dass die Aufnahme 18 zu dem Basiselement 12 in gewünschtem Umfang kippbar ist.

Um beim Betätigen der Spindeln 30, 32 ein Spiel zu vermeiden, ist des Weiteren bevorzugterweise die Hülse 34, 36 mit einem nicht dargestellten Federelement verbunden, so dass eine Relativbewegung in Längsrichtung der Hülse 34, 36 zu dem Basiselement 12 unterbunden wird.

Die das Neigen bzw. Kippen der Aufnahme 18 zum Basiselement 12 ermöglichenden Spindeln 30, 32 und Spindelhülsen 34, 36 sind zu dem Festkörpergelenk 20 derart ausgerichtet, dass zwischen diesen verlaufenden Verbindungslinien, also zum einen eine Verbindungslinie zwischen der Längsachse der Spindel 30 und der Längsachse des Festkörpergelenks 20 und zum anderen eine Verbindungslinie zwischen der Längsachse der Spindel 32 und der Längsachse des Festkörpergelenks 20, einen rechten oder nahezu rechten Winkel einschließen. Hierdurch ist sichergestellt, dass bei Betätigen eines Motors 22 bis 24 ein Kippen der Aufnahme 18 und damit der Lasereinheit und des Rotationskopfes 14 allein in einer Achse erfolgt.

Wie sich aus der zeichnerischen Darstellung ergibt, weist das Festkörpergelenk eine Quadergeometrie auf, wobei sich das Festkörpergelenk 20 aus einem Mittelteil 42 und Endabschnitten 44, 46 zusammensetzt, die in die Aufnahme 18 bzw. das Basiselement 12 übergehen. Dabei vergrößert sich der Querschnitt des Festkörpergelenks 20 von dem Mittelteil 42 ausgehend in Richtung der Aufnahme 18 bzw. des Basiselements 12.

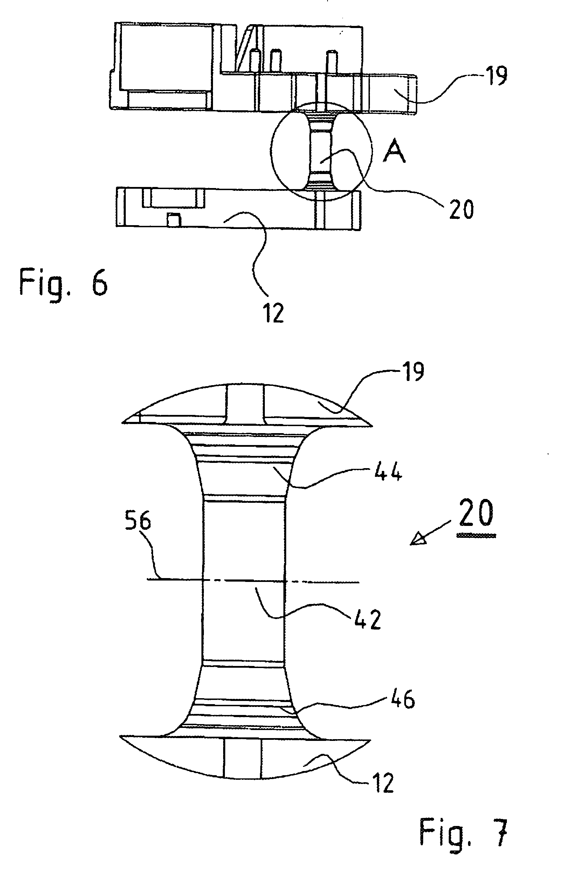

Ferner ist das Festkörpergelenk 20 symmetrisch zu einer Ebene (gestrichelte Linie 56 in Fig. 7) ausgebildet, die die Längsachse des Festkörpergelenks 20 senkrecht schneidet und mittig zwischen einander zugewandten Flächen der Trägerplatte 19 und der Basisplatte 12 verläuft. Von den Flächen geht das Festkörpergelenk 20 aus.

Des Weiteren ist das Festkörpergelenk 20 derart zu den Spindeln 30, 32 ausgerichtet, dass die von diesen ausgehenden und die Längsachse des Festkörpergelenks 20 schneidenden Linien senkrecht die Außenflächen 50, 52 des Mittelteils 42 durchsetzen.

Durch die Anordnung der Spindeln 30, 32 und der Spindelmuttern 34, 36 zu dem Festkörpergelenk 20 und dessen quaderförmige Geometrie und die Ausrichtung der Außenseiten 50, 52 zu den Spindeln 30, 32 ist sichergestellt, dass das Festkörpergelenk 20 um zwei jeweils um 90° versetzte Ebenen unabhängig voneinander kippbar ist.

Durch das erfindungsgemäße Festkörpergelenk 20 ergibt sich ein spielfreies Kippen der Aufnahme 18 zu dem Basiselement 12, ohne dass Reibungen auftreten. Somit ist auch ein Schmieren nicht erforderlich. Ferner ist das Festkörpergelenk wartungsfrei.

Die Aufnahme 18 mit dem Festkörpergelenk 20 und dem Basiselement 12 bestehen vorzugsweise aus Polypropylen oder andere geeignete Materialien wie POM (Polyoxymethylen) und werden vorzugsweise durch Spritzgießen hergestellt. Somit ist eine kostengünstige Herstellung der entsprechenden Einheit möglich. Das die Lasereinheit aufnehmende Gehäuse 16 kann ein von der Aufnahme 18 bzw. der Trägerplatte 19 getrennt hergestelltes Bauteil sein, das mit der Aufnahme 18 über Schraub- oder Rastverbindungen verbindbar ist.

Ist die erfindungsgemäße Lehre mit dem Festkörpergelenk vorzugsweise für Laservorrichtungen in Form von Rotationslasern einsetzbar, so ist eine Verwendung auch für andere Anwendungsfälle geeignet, bei denen ein optischer Strahl zu einer Basis im gewünschten Umfang verstellbar sein soll.

## Patentansprüche

1. Laservorrichtung, insbesondere Rotationslaser, umfassend eine Aufnahme (18) mit einer von dieser ausgehenden Lasereinheit und gegebenenfalls mit einem eine Laserstrahlung in eine Rotationsebene umlenkenden Rotationskopf (14), wobei die Aufnahme mit einem Basiselement (12) verbunden ist, zu dem die Aufnahme neigungsmäßig über zwei Stellantriebe (22, 24) verstellbar ist,
**dadurch gekennzeichnet,**
**dass** die Aufnahme (18) mit dem Basiselement (12) über die zwei Stellantriebe (22, 24) und über ein Festkörpergelenk (20) verbunden ist, dass die Aufnahme, das Basiselement und das Festkörpergelenk eine aus Kunststoff bestehende Einheit bilden, und dass die Stellantriebe zu dem Festkörpergelenk (20) derart angeordnet sind, dass Verbindungslinien zwischen Längsachse des Festkörpergelenks und den Stellantrieben einen rechten Winkel einschließen.

2. Laservorrichtung nach Anspruch 1,
**dadurch gekennzeichnet,**
**dass** jeder Stellantrieb (22, 24) eine Spindel (30, 32) mit an dem Basiselement (12) sich abstützender Spindelmutter (34, 36) umfasst, wobei die Spindel über einen von der Aufnahme (18) ausgehenden Motor in Drehbewegung versetzbar ist.

3. Laservorrichtung nach Anspruch 2,
**dadurch gekennzeichnet,**
**dass** die Spindelmutter (34, 36) hülsenartig ausgebildet und kippbar auf dem Basiselement (12) abgestützt ist, wobei vorzugsweise Abstützpunkte der Spindelmuttern (34, 36) auf dem Basiselement (12) und Drehpunkt des Festkörpergelenks (20) in oder nahezu in einer gemeinsamen Ebene verlaufen.

4. Laservorrichtung nach zumindest einem der vorhergehenden Ansprüche,
**dadurch gekennzeichnet,**
**dass** die Stellantriebe Aktoren wie Piezoelemente sind.

5. Laservorrichtung nach zumindest einem der vorhergehenden Ansprüche,
**dadurch gekennzeichnet,**
**dass** die Aufnahme (18) eine Trägerplatte (19) umfasst, von der ein Gehäuse (16) für die Lasereinheit und ggfs. den Rotationskopf (14) ausgeht.

6. Laservorrichtung nach zumindest einem der vorhergehenden Ansprüche,
**dadurch gekennzeichnet,**
**dass** die Aufnahme (18) bzw. die Trägerplatte (19) mit dem Festkörpergelenk (20) und dem Basiselement (12) aus Kunststoff, insbesondere Polypropylen oder Polyoxymethylen besteht.

7. Laservorrichtung nach zumindest einem der vorhergehenden Ansprüche,
**dadurch gekennzeichnet,**
**dass** die Aufnahme (18) bzw. die Trägerplatte (19) mit dem Festköipergelenk (20) und dem Basiselement (12) ein Spritzgussteil ist.

8. Laservorrichtung nach zumindest einem der vorhergehenden Ansprüche,
**dadurch gekennzeichnet,**
**dass** das Festkörpergelenk (20) zumindest abschnittsweise eine Quadergeometrie oder quaderähnliche Geometrie aufweist.

9. Laservorrichtung nach zumindest einem der vorhergehenden Ansprüche,
**dadurch gekennzeichnet,**
**dass** das Festkörpergelenk (20) aus einem eine Quadergeometrie aufweisenden oder quaderähnlichen Mittelteil (42) und zu beiden Seiten verlaufenden sich im Querschnitt vergrößernden Endabschnitten (44, 46) besteht, die in die Aufnahme (18) bzw. die Trägerplatte (19) einerseits und das Basiselement (12) andererseits übergehen.

10. Laservorrichtung nach zumindest einem der vorhergehenden Ansprüche,
**dadurch gekennzeichnet,**
**dass** die von den Stellantrieben (22, 24) ausgehenden Verbindungslinien senkrecht oder nahezu senkrecht Außenflächen (50, 52) des die Quadergeometrie aufweisenden Festkörpergelenks (20) durchsetzen.

11. Laservorrichtung nach zumindest einem der vorhergehenden Ansprüche,
**dadurch gekennzeichnet,**
**dass** das Mittelteil jeweils einen Radius aufweisende Außenseiten umfasst.

12. Laservorrichtung nach zumindest einem der vorhergehenden Ansprüche,
**dadurch gekennzeichnet,**
**dass** das Festkörpergelenk (20) symmetrisch zu einer senkrecht die Längsachse des Festkörpergelenks schneidenden Ebene ausgebildet ist.

13. Laservorrichtung nach zumindest einem der vorhergehenden Ansprüche,
**dadurch gekennzeichnet.**
**dass** die Ebene mittig zwischen einander zugewandten Flächen der Aufnahme (18) und des Basiselements (12) verläuft.

14. Laservorrichtung nach zumindest einem der vorhergehenden Ansprüche,
**dadurch gekennzeichnet,**
**dass** das Basiselement (12) plattenförmig ausgebildet ist.

15. Laservorrichtung nach zumindest einem der vorhergehenden Ansprüche,
**dadurch gekennzeichnet,**
**dass** die Spindelmutter (34, 36) mit dem Basiselement (12) über ein Federelement verbunden ist.

## Claims

1. Laser device, especially rotation laser, comprising a receptacle (18) with a laser unit originating from this and possibly with a rotation head (14) deflecting a laser radiation in a plane of rotation, wherein the receptacle is connected to a base element (12), relative to which the receptacle is adjustable in terms of inclination by two actuating drives (22, 24),
**characterized in**
**that** the receptacle (18) is connected to the base element (12) by the two adjusting drives (22, 24) and by a solid joint (20), that the receptacle, the base element and the solid joint form a unit made of plastic, and that the adjusting drives are arranged with respect to the solid joint (20) so that the lines of connection between longitudinal axis of the solid joint and the adjusting drives form a right angle.

2. Laser device according to claim 1,
**characterized in**
**that** each adjusting drive (22, 24) comprises a spindle (30, 32) with a spindle nut (34, 36) braced against the base element (12), said spindle is adapted for being moved rotatably by a motor originating from the receptacle (18).

3. Laser device according to claim 2,
**characterized in**
**that** the spindle nut (34, 36) is designed sleeve-like and is braced against the base element (12) so as to be tiltable, wherein preferably support points of the spindle nuts (34, 36) run on the base element (12) and pivot point of the solid joint (20) runs in or approximately in a common plane.

4. Laser device according at least one of the preceding claims,
**characterized in**
**that** the adjusting drives are actuators, such as piezo-elements.

5. Laser device according at least one of the preceding claims,
**characterized in**
**that** the receptacle (18) comprises a carrier plate (19), from which a housing (16) for the laser unit and possibly the rotation head (14) origins.

6. Laser device according at least one of the preceding claims,
**characterized in**
**that** the receptacle (18), respectively the carrier plate (19) with the solid joint (20) and the base element (12) consist of plastic, especially polypropylene or polyoxymethylene.

7. Laser device according at least one of the preceding claims,
**characterized in**
**that** the receptacle (18), respectively the carrier plate (19) with the solid joint (20) and the base element (12) is an injection molded part.

8. Laser device according at least one of the preceding claims,
**characterized in**
**that** the solid joint (20) has at least in portions a cuboid or cuboid-like geometry.

9. Laser device according at least one of the preceding claims,
**characterized in**
**that** the solid joint (20) consists of a middle piece (42) having a cuboid or cuboid-like geometry and end segments (44, 46) extending on either side and increasing in cross section, passing into the receptacle (18) or carrier plate (19), on the one hand, and the base element (12), on the other.

10. Laser device according at least one of the preceding claims,
**characterized in**
**that** the lines of connection starting from the adjusting drives (22, 24) run perpendicular or nearly perpendicular through outer surfaces (50, 52) of the solid joint (20) having the cuboid geometry.

11. Laser device according at least one of the preceding claims,
**characterized in**
**that** the middle piece has outer sides having a radius each.

12. Laser device according at least one of the preceding claims,
**characterized in**
**that** the solid joint (20) is designed symmetrically to a plane perpendicularly intersecting the longitudinal axis of the solid joint.

13. Laser device according at least one of the preceding claims,
**characterized in**
**that** the plane extends in the middle between facing surfaces of the receptacle (18) and the base element (12).

14. Laser device according at least one of the preceding claims,
**characterized in**
**that** the base element (12) is designed in the shape of a plate.

15. Laser device according at least one of the preceding claims,
**characterized in**
**that** the spindle nut (34, 36) is connected to the base element (12) via a spring element.

## Revendications

1. Appareil à laser, en particulier laser rotatif, comprenant un plateau (18) avec une unité laser partant de celui-ci et le cas échéant avec une tête rotative (14) déviant un rayonnement laser dans un plan de rotation, sachant que le plateau est relié à un élément de base (12) par rapport auquel le plateau est réglable en inclinaison par deux mécanismes de commande (22, 24),
**caractérisé en ce**
**que** le plateau (18) est relié à l'élément de base (12) par les deux mécanismes de commande (22, 24) et par une articulation à corps solide (20), que le plateau, l'élément de base et l'articulation à corps solide forment une unité constituée de matière synthétique, et que les mécanismes de commande sont disposés par rapport à l'articulation à corps solide (20) de manière telle que les lignes de jonction entre l'axe longitudinal de l'articulation à corps solide et les mécanismes de commande inscrivent un angle droit.

2. Appareil à laser selon la revendication 1,
**caractérisé en ce**
**que** chaque mécanisme de commande (22, 24) comprend une vis-sans-fin (30, 32) avec écrou (34, 36) s'appuyant sur l'élément de base (12), la vis-sans-fin pouvant être mise en rotation par un moteur partant du plateau (18).

3. Appareil à laser selon la revendication 2,
**caractérisé en ce**
**que** l'écrou (34, 36) est conçu en forme de manchon et s'appuie sur l'élément de base (12) de manière à pouvoir basculer, sachant que de préférence les points d'appui des écrous (34, 36) sur l'élément de base (12) et le centre de rotation de l'articulation à corps solide (20) se trouvent dans un plan commun ou presque.

4. Appareil à laser selon au moins une des revendications précédentes,
**caractérisé en ce**
**que** les mécanismes de commande sont des actionneurs tels que des éléments piézo.

5. Appareil à laser selon au moins une des revendications précédentes,
**caractérisé en ce**
**que** le plateau (18) comprend une plaque-support (19) de laquelle part un boîtier (16) pour l'unité laser et, le cas échéant, pour la tête rotative (14).

6. Appareil à laser selon au moins une des revendications précédentes,
**caractérisé en ce**
**que** le plateau (18) et/ou la plaque-support (19) avec l'articulation à corps solide (20) et l'élément de base (12) sont constitués d'une matière synthétique, en particulier de polypropylène ou de polyoxyméthylène.

7. Appareil à laser selon au moins une des revendications précédentes,
**caractérisé en ce**
**que** le plateau (18) et/ou la plaque-support (19) avec l'articulation à corps solide (20) et l'élément de base (12) sont des pièces moulées par injection.

8. Appareil à laser selon au moins une des revendications précédentes,
**caractérisé en ce**
**que** l'articulation à corps solide (20) présente au moins partiellement une forme de parallélépipède ou proche d'un parallélépipède.

9. Appareil à laser selon au moins une des revendications précédentes,
**caractérisé en ce**
**que** l'articulation à corps solide (20) est constituée d'une partie centrale (42) présentant une forme de parallélépipède ou proche d'un parallélépipède, et d'extrémités (44, 46) s'étendant vers les deux côtés avec des sections transversales s'accroissant, qui se fondent dans le plateau (18) ou la plaque-support (19) d'un côté et dans l'élément de base (12) de l'autre côté.

10. Appareil à laser selon au moins une des revendications précédentes,
**caractérisé en ce**
**que** les lignes de jonction issues des mécanismes de commande (22, 24) traversent perpendiculairement ou quasi perpendiculairement les faces extérieures (50, 52) de l'articulation à corps solide (20) présentant une forme de parallélépipède.

11. Appareil à laser selon au moins une des revendications précédentes,
**caractérisé en ce**
**que** la partie centrale comprend des faces extérieures présentant chacune un rayon.

12. Appareil à laser selon au moins une des revendications précédentes,
**caractérisé en ce**
**que** l'articulation à corps solide (20) est conçue symétrique par rapport à un plan coupant perpendiculairement l'axe longitudinal de l'articulation à corps solide.

13. Appareil à laser selon au moins une des revendications précédentes,
**caractérisé en ce**
**que** le plan est centré entre des faces du plateau (18) et de l'élément de base (12) se faisant vis-à-vis.

14. Appareil à laser selon au moins une des revendications précédentes,
**caractérisé en ce**
**que** l'élément de base (12) est conçu en forme de plaque.

15. Appareil à laser selon au moins une des revendications précédentes,
**caractérisé en ce**
**que** l'écrou (34, 36) est relié à l'élément de base (12) par un élément élastique.
